# EUROPEAN PATENT APPLICATION

(11) **EP 2 720 439 A1**
(43) Date of publication of application: **16.04.2014**
(21) Application number: 12796035.9
(22) Date of filing: 06.06.2012
(51) Int. Cl.: H04M 1/00

(54) **PORTABLE DEVICE**

(30) Priority: 08.06.2011 JP 2011128104
(71) Applicant: NEC CASIO Mobile Communications, Ltd., Kawasaki-shi Kanagawa 211-8666 (JP)
(72) Inventor: MURAMATSU, Eiji, Kawasaki-shi Kanagawa 211-8666 (JP)
(74) Representative: Vossius & Partner
(86) International application number: PCT/JP2012/064559
(87) International publication number: WO 2012/169528

(57) **Abstract**

Wireless device (10) includes communication unit (11) that receives identification information about a communication device in its proximity thereof, holder (12) that holds the identification information received by communicating unit (11), and processor (13) that estimates an attribute of the user of the communication device based on the identification information held by holder (12).

## Description

### Technical field:

The present invention relates to a portable device, a portable system, and a processing method, and more particularly to a portable device, a portable system, and a processing method for estimating an attribute of the user of the portable device.

### Background art:

Many services have been studied for simultaneously distributing information, that is to be provided to the users of portable terminals, to the portable terminals. These services often distribute information irrespective of attributes such as taste of the users of the portable terminals.

Patent document 1discloses a server for holding profile information of the users of a plurality of portable terminals corresponding to respective identification information of the portable terminals, and portable terminals for accessing the server. Each of the portable terminals disclosed in Patent document 1 has a wireless unit for connecting to the server and a close-range communication unit for storing its own identification information and performing close-range communications with other portable terminals.

Each of the portable terminals disclosed in Patent document 1 operates as follows: When the close-range communication unit of a portable terminal acquires identification information of another portable terminal by way of close-range communications, the wireless unit sends the identification information of the portable terminal and the identification information of its own portable terminal to the server. The server judges or estimates the attributes of the users of the respective portable terminals using profile information that corresponds to the respective identification information of the portable terminals, performs a matching judgment, and returns the result of the matching judgment.

When the portable terminal disclosed in Patent document 1 receives the result of the matching judgment, it displays the result of the matching judgment. Therefore, the portable terminal estimates compatibility with the user of the other portable terminal, using the server that holds the profile information that corresponds to the respective identification information.

### Prior technical documents:

### Patent documents:

Patent document 1: JP2010-251858A

### Summary of the invention:

### Problems to be solved by the invention:

The portable terminal disclosed in Patent document 1 sends its own identification information and the identification information of another portable terminal to the server, and displays the result of the matching judgment carried out by the server.

Therefore, in order for the portable terminal to acquire the result of the matching judgment, a server which judges or estimates an attribute of the user of the other portable terminal that has performed close-range communications with the portable terminal is needed. Consequently, the portable terminal is problematic in that it needs a complex system configuration.

It is an object of the present invention to provide a portable device, a portable system, and a processing method which are capable of estimating an attribute of a party in the proximity with a simple arrangement.

### Means for solving the problems:

A portable device according to the present invention includes communicating means that receives identification information about a communication device in the proximity thereof, holding means that holds the identification information received by the communicating means, and processing means that estimates an attribute of the user of the communication device based on the identification information held by the holding means.

A portable system according to the present invention includes a first portable device and a second portable device, wherein the first portable device comprises communicating means that receives identification information about the second portable device in the proximity of the first portable device, holding means that holds the identification information received by the communicating means, and processing means that estimates an attribute of the user of the second portable device based on the identification information held by the holding means.

A processing method according to the present invention, to be carried out by a portable device, comprises the communicating step of receiving identification information about a communication device in the proximity thereof, the holding step of holding the identification information which is received in holding means, and the processing step of estimating an attribute of the user of the communication device based on the identification information held by the holding means.

A processing method according to the present invention for a portable system including a first portable device and a second portable device, comprises the first portable device performing the communicating step of receiving identification information of the second portable device in the proximity of the first portable device, the first portable device performing the holding step of holding the identification information which is received in holding means, and the first portable device performing the processing step of estimating an attribute of the user of the second portable device based on the identification information held by the holding means.

A program according to the present invention enables a computer to carry out a communicating process for receiving identification information about a communication device in its proximity thereof, a holding process for holding the identification information which is received in holding means, and a processing process for estimating an attribute of the user of the communication device based on the identification information held by the holding means. Advantages of the invention:

According to the present invention, it is possible to estimate an attribute of a party in the proximity with a simple arrangement.

### Brief description of the drawings:

Fig. 1 is a block diagram showing the configuration of a wireless device according to an exemplary embodiment of the present invention;
Fig. 2 is a block diagram showing the configuration of a portable system that has two wireless devices; and
Fig. 3 is a flowchart of an example of the processing sequence of a processing method carried out by the wireless device.

### Mode for carrying out the invention:

An exemplary embodiment of the present invention will be described below with reference to the drawings.

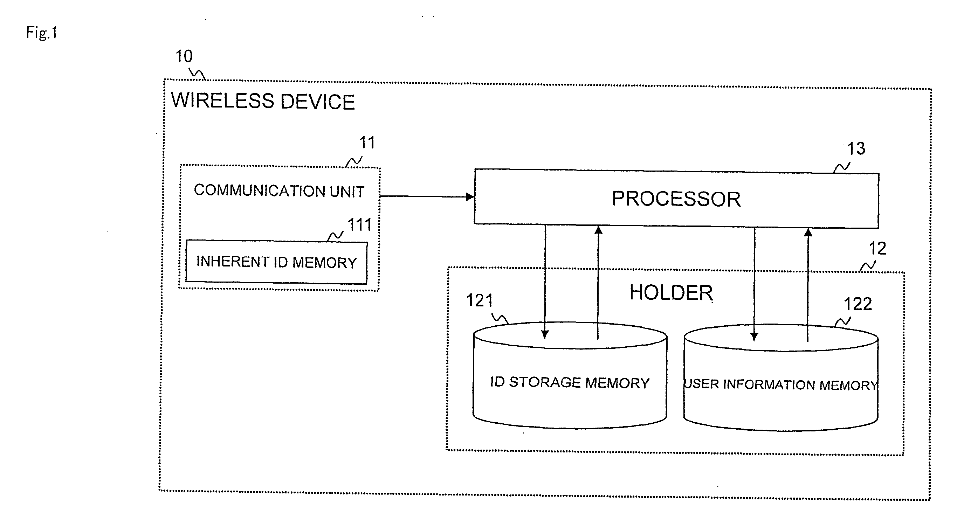

Fig. 1 is a block diagram showing the configuration of a wireless device according to an exemplary embodiment of the present invention.

Wireless device 10 is a portable device which performs wireless communications in a close range (hereinafter referred to as "close-range communications") with a communication device positioned in the proximity of wireless device 10 when a person who holds the communication device passes the user of wireless device 10. For example, wireless device 10 is realized by a portable phone. With reference to Fig. 1, the communication device which is performing close-range communications with wireless device 10 is referred to as a "proximity device".

Wireless device 10 includes communication unit 11, holder 12, and processor 13. Communication unit 11 has inherent ID (IDentification) memory 111. Holder 12 has ID storage memory 121 and user information memory 122.

Communication unit 11 is a wireless transmission device for performing close-range communications with a proximity device that exists in a communication area where wireless communications are possible. Communication unit 11 receives, from the proximity device, identification information that identifies the proximity device. The close-range communications may be Bluetooth communications.

Inherent ID memory 111 holds an inherent ID that is inherent in wireless device 10. For example, inherent ID memory 111 holds an inherent ID inherent in each type of wireless device 10.

According to the present exemplary embodiment, communication unit 11 receives the inherent ID of a proximity device and the user information of the user of the proximity device, as identification information of the proximity device, from the proximity device. The user information of the proximity device is detailed identification information, and is also called device user information of the proximity device.

The user information mainly represents taste, behavior history, and contact list of the user. For example, the user information represents "movie" as the taste of the user, and "theaters" that the user has visited recently and "titles" of movies that the user has watched in the theaters as the behavior history of the user. The user information also represents parties with whom the user has exchanged information, as the contact list.

When communication unit 11 receives the inherent ID and the user information of the proximity device from the proximity device, communication unit 11 supplies the inherent ID and the user information to processor 13.

Holder 12 holds the identification information received by communication unit 11. Holder 12 holds inherent ID and user information each of a plurality of inherent IDs. Holder 12 also holds a count representing the number of times that the proximity device passes wireless device 10, for each inherent ID. The count is incremented each time when an inherent ID is received by communication unit 11. Holder 12 comprises a computer-readable recording medium.

ID storage memory 121 holds inherent ID, user information, a count depending on the number of times that the inherent ID is received, and the latest date and time at which the proximity device passes wireless device 10, in association with each other, each inherent ID.

User information memory 122 holds inherent IDs and user information that correspond to each other for each particular number (e.g., 100) of inherent IDs. User information memory 122 also holds user information about the user of wireless device 10.

Processor 13 is a computer for estimating an attribute of the user (device user) of the proximity device based on the identification information held by holder 12.

When processor 13 receives an inherent ID and user information as information transmitted from a proximity device, for example, from communication unit 11, processor 13 selects a particular number of inherent IDs in the descending order of counts of inherent IDs from among the inherent IDs in ID storage memory 121. If the selected inherent IDs contain the inherent ID received from communication unit 11, then processor 13 estimates an attribute of the user of the proximity device using the user information.

Alternatively, if the count of the identification information held by holder 12 exceeds a predetermined threshold value, then processor 13 may receive user information from communication unit 11 and estimate an attribute of the user of the proximity device using the user information.

According to the present exemplary embodiment, when processor 13 receives an inherent ID and user information from communication unit 11, processor 13 stores the inherent ID and the user information in ID storage memory 121. Processor 13 increments the count of the inherent ID received from communication unit 11 among the counts stored in ID storage memory 121, and stores the incremented count as a new count in ID storage memory 121. Processor 13 discards the user information that corresponds to the inherent ID whose count has not been incremented until a predetermined holding time elapses after the user information is stored in ID storage memory 121.

When processor 13 increments the count of the inherent ID received from communication unit 11, processor 13 selects a particular number of inherent IDs in a descending order of counts from among the inherent IDs in ID storage memory 121. Alternatively, processor 13 may select a particular number of inherent IDs in an ascending order of counts from among the inherent IDs in ID storage memory 121.

Processor 13 extracts the selected particular number of inherent IDs and the user information associated with the inherent IDs from ID storage memory 121, and stores each of the extracted inherent IDs and the user information that correspond to each other in user information memory 122. If any one of the inherent IDs stored in user information memory 122 agrees with the inherent ID received from communication unit 11, then processor 13 reads the user information that correspond to the inherent ID from user information memory 122.

When processor 13 reads the user information from user information memory 122, processor 13 estimates an attribute of the user of the proximity device using the user information. Processor 13 searches the user information of the wireless device 10 that is stored in user information memory 122 for relevant information related to the estimated attribute of the user of the proximity device. If relevant information is detected from the user information of wireless device 10, then processor 13 supplies the relevant information to communication unit 11, which sends the relevant information to the proximity device.

For example, it is assumed that user information memory 122 holds coupon information representing a movie coupon as the user information of wireless device 10 and processor 13 has read user information indicating a movie as the taste of the user of the proximity device, from user information memory 122. Processor 13 then identifies the movie as the taste of the user of the proximity device as an attribute of the user of the proximity device, and searches the user information of wireless device 10 in user information memory 122, using the identified movie as a keyword. When processor 13 detects the coupon information of the movie from the user information of wireless device 10 as relevant information, processor 13 provides coupon information of the movie via communication unit 11 to the proximity device.

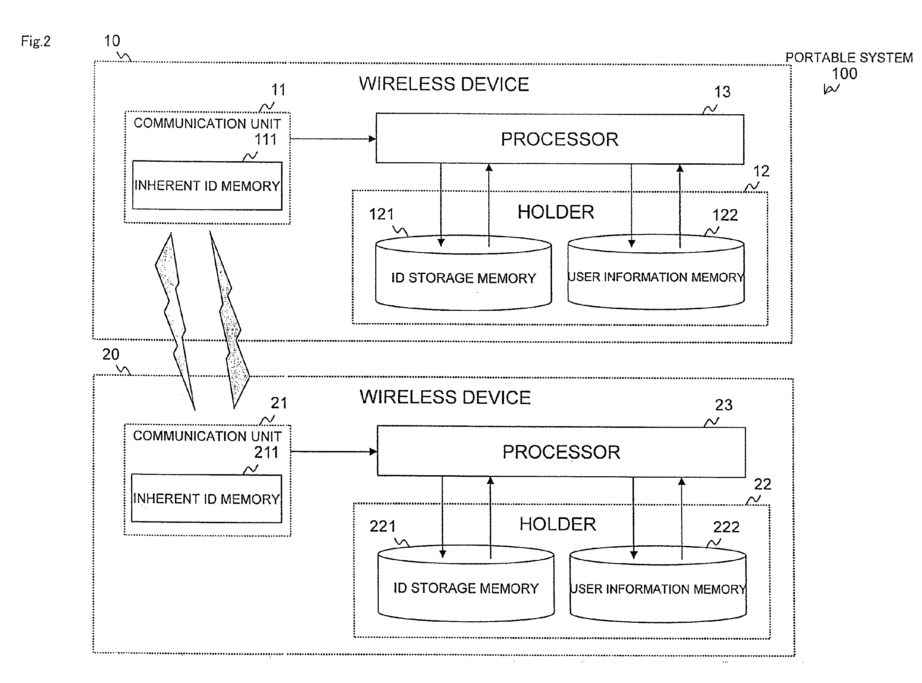

Fig. 2 is a block diagram showing by way of example the configuration of portable system 100.

Portable system 100 has wireless device 10 (first portable device) and wireless device 20 (second portable device).

Wireless device 10 is of the same configuration as shown in Fig. 1, and will not be described in detail below with its components being denoted by identical reference numerals to those shown in Fig. 1.

Wireless device 20 is of the same configuration as wireless device 10, and includes communication unit 21 having inherent ID memory 211, holder 22 having ID storage memory 221 and user information memory 222, and processor 23.

Communication unit 21 corresponds to communication unit 11. Inherent ID memory 211 corresponds to inherent ID memory 111. ID storage memory 221 corresponds to ID storage memory 121. User information memory 222 corresponds to user information memory 122. Processor 23 corresponds to processor 13.

Operation of portable system 100 will be described below.

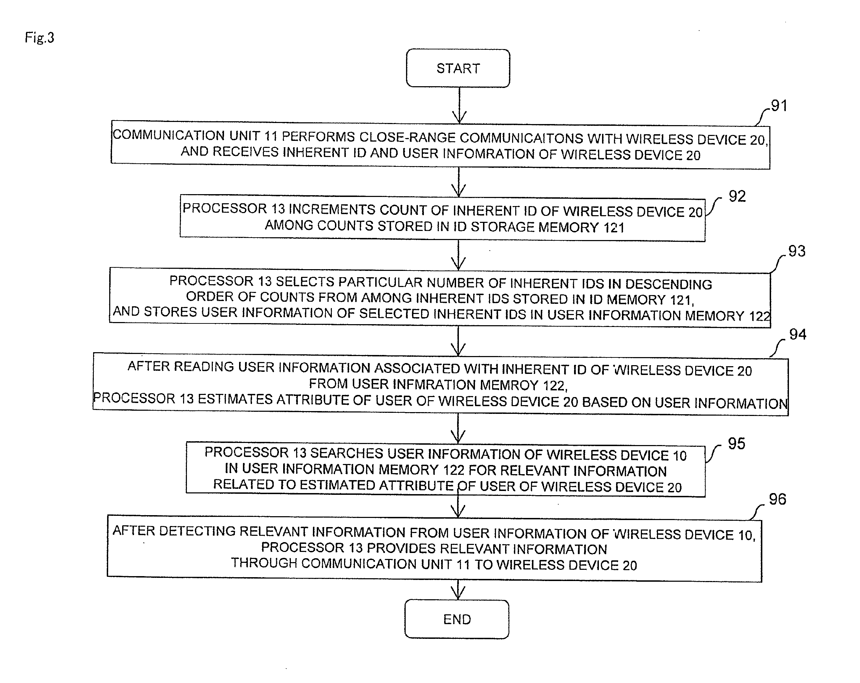

Fig. 3 is a flowchart of an example of the processing sequence of a processing method carried out by portable system 100. In Fig. 3, wireless device 10 and wireless device 20 are positioned in proximity to each other within an area where close-range communications are possible.

Communication units 11, 21 perform close-range communications with each other, exchanging inherent IDs that are stored respectively in inherent ID memories 111, 211. Communication units 11, 21 also exchange user information of their own devices that are stored respectively in user information memories 122, 222.

Specifically, communication unit 11 sends the inherent ID stored in inherent ID memory 111 and the user information stored in use information memory 122 to communication unit 21. Communication unit 21 receives the inherent ID and the user information of wireless device 20 from communication unit 11. Communication unit 21 sends the inherent ID stored in inherent ID memory 211 and the user information stored in use information memory 222 to communication unit 11. In step 91, communication unit 11 receives the inherent ID and the user information of wireless device 10 from communication unit 21. Since wireless devices 10, 20 perform the same processing sequences, operation of only wireless device 10 will be described below.

After communication unit 11 has supplied the received inherent ID and the received user information of wireless device 20 to processor 13, processor 13 stores the inherent ID and the user information of wireless device 20 and the date and time at which the user information was stored, in ID storage memory 121. In step 92, processor 13 increments the count that correspond to the inherent ID of the wireless device 20 in the ID storage memory 121, and overwrites the previous data with the incremented count as a new count in ID storage memory 121.

After processor 13 has incremented the count that correspond to the inherent ID of the wireless device 20, processor 13 selects, in step 93, a particular number of inherent IDs in a descending order of counts, each representing the number of times that the proximity device passes wireless device 10, from among the inherent IDs in ID storage memory 121. Processor 13 also extracts the selected inherent IDs and the user information that correspond to the inherent IDs from ID storage memory 121. Processor 13 further stores each of the extracted inherent IDs and the latest user information associated that correspond to each other in user information memory 122. In other words, processor 13 updates the user information storage in user information memory 122.

After having updated the user information storage in user information memory 122, processor 13 judges whether the inherent ID received from communication unit 11 agrees with any one of the inherent IDs stored in user information memory 122 or not. If the inherent ID received from communication unit 11 does not agree with any one of the inherent IDs stored in user information memory 122, then the processing method carried out by portable system 100 is ended.

If the inherent ID from communication unit 11 agrees with any one of the inherent IDs stored in user information memory 122, then processor 13 reads, from user information memory 122, user information that correspond to the inherent ID from communication unit 11 that agreed with any of the inherent IDs stored in user information memory 122. In step 94, processor 13 analyzes the user information of wireless device 20 which has been read from user information memory 122, and estimates an attribute of the user of wireless device 20, i.e., taste and behavioral pattern of the user.

After having estimated an attribute of the user of wireless device 20, processor 13 reads the user information of wireless device 10 from user information memory 12. In step 95, processor 13 searches the user information for relevant information related to the estimated attribute of the user of wireless device 20.

In step 96, after having detected relevant information from among the user information of wireless device 10, processor 13 supplies the relevant information through communication unit 11 to wireless device 20. Thereafter, the processing method carried out by portable system 100 is ended.

The present exemplary embodiment describes that communication unit 11 receives both the inherent ID and the user information of wireless device 20 from communication unit 21. However, communication unit 11 may receive only the inherent ID of wireless device 20 from communication unit 21, and after processor 13 increments the count of the inherent ID and when the inherent ID of wireless device 20 is selected as one of a particular number of inherent IDs, communication unit 11 may ask communication unit 21 for the user information of wireless device 20 and receive the user information from communication unit 21.

The present exemplary embodiment describes that communication unit 11 acquires the identification information of wireless device 20 from wireless device 20 in positioned proximity to communication unit 11. However, the identification information of wireless device 20 may be acquired in other ways. For example, a server, different from wireless device 10, may be used for sending the identification information of wireless device 20 to wireless device 10 when the server is positioned in the proximity of wireless device 10. Specifically, each of wireless devices 10, 20 acquires positional information that indicates its own position from a GPS (Global Positioning System) at given periodic cycles, and sends the acquired positional information and its own identification information to the server. Each time the server receives the positional information of each wireless device, the server holds the positional information and time information. When the distance between wireless devices 10, 20 becomes shorter than a given distance threshold value, the server sends the identification information of wireless device 20 to wireless device 10 and sends the identification information of wireless device 10 to wireless device 20. Therefore, wireless devices 10, 20 can receive the identification information of the proximity devices from the server.

According to the present exemplary embodiment, in wireless device 10, when communication unit 11 receives the identification information of a portable device that is positioned in proximity to wireless device 10, processor 13 stores the identification information of the portable device in holder 12, and estimates an attribute of the user of the portable device based on the number of times that the identification information is stored in holder 12.

It is thought to be highly likely that, in general, a person who passes the user of wireless device 10 has attributes, such as behavioral patterns or taste, that are similar to those of the user of wireless device 10.

Consequently, each time wireless device 10 passes the device user of a portable device, wireless device 10 acquires the identification information of the portable device that is positioned in proximity to wireless device 10. If the number of times that wireless device 10 has acquired the identification information is greater, wireless device 10 estimates that the user of the portable device in the proximity has attributes having greater similar to the attribute of the user of wireless device 10.

Accordingly, wireless device 10 is capable of estimating an attribute, such as behavioral pattern or the like, of the device user of a portable device with a simple arrangement, without using a server which holds profile information of the device user of the portable device.

For example, in wireless device 10, holder 12 has ID storage memory 121 for holding a count depending on the number of times that the identification information of a portable device is received. When communication unit 11 receives from a portable device in proximity to communication unit 11 the user information about the user of the portable device as the identification information of the portable device, if an incremented value of the count held in ID storage memory 121 exceeds a predetermined threshold value, then processor 13 estimates an attribute of the user of the portable device in proximity to communication unit 11 using the user information of the portable device which has been received by communication unit 11. The user information represents, for example, the taste of the device user, places that the device user has visited recently, etc.

According to the present exemplary embodiment, ID storage memory 121 holds a count depending on the number of times that user information is received with respect to each item of user information. When communication unit 11 receives the user information of a portable device in proximity to communication unit 11, as information transmitted from the portable device in proximity to communication unit 11, processor 13 selects a particular number of identification information in a descending order of counts of user information from among a plurality of user information stored in ID storage memory 121. If the selected user information contains the transmitted information received by communication unit 11, then processor 13 estimates an attribute of the user of the portable device identified by the transmitted information, using the transmitted information.

Wireless device 10 receives user information from a portable device owned by a person whose attribute is highly similar to the attribute of the user of wireless device 10, and estimates in greater detail the attribute of the user of the portable device using the user information.

Therefore, in cases where a portable device is owned by a person whose attribute is highly similar to the attribute of the user of wireless device 10, wireless device 10 can estimate in greater detail the attribute of the user by using the information about the user of the portable device. Since wireless device 10 does not estimate in greater detail the attribute of the user of a portable terminal whose attributes have less similarity, using its user information, any unnecessary processing of wireless device 10 is minimized.

According to the present exemplary embodiment, holder 12 also has user information memory 122 for holding relevant information related to a particular attribute of the user of a portable device. When processor 13 estimates an attribute of the user of a portable device in proximity to communication unit 11 to be the particular attribute, communication unit 11 sends the relevant information held by user information memory 122 to the portable device in the proximity.

Therefore, when wireless device 10 passes a person whose attribute is highly similar to the attribute of the user of wireless device 10, while holding relevant information related to an attribute (particular attribute) of the user of wireless device 10, wireless device 10 acquires user information from the portable device in its proximity, and estimates, in greater detail, the attribute of the user who is using the portable device by using the acquired information. If wireless device 10 estimates that the attribute of the user who is using the portable device is similar to the attribute (particular attribute) of the user who is using wireless device 10, then wireless device 10 will provide the relevant information to the portable device.

Generally, a distribution device that distributes delivery information to portable devices distributes delivery information to all the portable devices regardless of behavioral patterns and relationships of persons who pass the distribution device. Therefore, a portable device may come to hold delivery information that is not needed by the device user of the portable device. If this occurs, the device user has to perform a tedious and time-consuming process of deleting the unnecessary delivery information using the portable device. If a number of items of delivery information that are not necessary for a user are distributed from the distribution device to the user, then the user may take steps to stop the distribution of information from the distribution device. The user may then realize that there is a limited possibility that he/she can obtain useful information.

On the other hand, wireless device 10 properly grasps behavioral patterns and relationships of persons who pass the wireless device 10, and provides relevant information suitable for the device users of portable devices that are used by those persons. Consequently, the device users of the portable devices are more likely to acquire useful information.

Wireless device 10 may hold relevant information related to a particular attribute that is different from the attribute of the user who is using wireless device 10. In this case, if the count held by ID storage memory 121 is smaller than a predetermined threshold value, wireless device 10 estimates an attribute of the device user of a portable device using the user information, and provides the relevant information to the portable device if the estimated attribute is estimated to be a particular attribute different from the attribute of the user who is using wireless device 10. Therefore, wireless device 10 can appropriately provide the relevant information related to the particular attribute that is different from the attribute of the user who is using wireless device 10 to the portable device with in the proximity.

Although the present invention has been described with respect to the exemplary embodiment, the present invention is not limited to the above exemplary embodiment. Various changes that can be understood by those skilled in the art may be made to the configurations and details of the present invention within the scope of the present invention.

This application is based upon and claims the benefit of priority from Japanese Patent Application No. 2011-128104 filed on June 8, 2011, the entire disclosure of which is incorporated herein by reference.

## Claims

1. A portable device comprising:
communicating means that receives identification information about a communication device in the proximity thereof;
holding means that holds the identification information received by said communicating means; and
processing means that estimates an attribute of the user of said communication device based on the identification information held by said holding means.

2. The portable device according to claim 1, wherein
said holding means also holds a count depending on the number of times that said identification information is received;
said communicating means receives device user information about the user of said communication device as said identification information; and
said processing means estimates an attribute of the device user of said communication device using the device user information received by said communicating means if said count exceeds a predetermined threshold value.

3. The portable device according to claim 1 or 2, wherein
said communicating means receives device user information about the user of said communication device as said identification information;
said holding means holds a count depending on the number of times that said device user information is received with respect to each item of said device user information; and
said processing means selects a particular number of items of device user information in a descending order of counts of said device user information from among a plurality of items of said device user information in said holding means when said communicating means receives transmitted information transmitted as said device user information, and estimates an attribute of the user of the communication device identified by said transmitted information, using said transmitted information, if the selected items of device user information contain the transmitted information received by said communicating means.

4. The portable device according to any one of claims 1 through 3, wherein
said holding means further holds relevant information related to a particular attribute of said device user; and
said communicating means sends said relevant information to said communication device when said processing means estimates said particular attribute.

5. A portable system comprising a first portable device and a second portable device, wherein
said first portable device comprises:
communicating means that receives identification information about said second portable device positioned in proximity to said first portable device;
holding means that holds the identification information received by said communicating means; and
processing means that estimates an attribute of the user of said second portable device based on the identification information held by said holding means.

6. The portable system according to claim 5, wherein
said holding means also holds a count depending on the number of times that said identification information is received;
said communicating means receives device user information about the device user of said second portable device as said identification information; and
said processing means estimates an attribute of the user of said second portable device using the device user information received by said communicating means if said count of said identification information exceeds a predetermined threshold value.

7. A processing method to be carried out by a portable device, comprising:
the communicating step of receiving identification information about a communication device in the proximity thereof;
the holding step of holding the identification information which is received in holding means; and
the processing step of estimating an attribute of the user of said communication device based on the identification information held by said holding means.

8. The processing method according to claim 7, wherein
said holding step also holds a count depending on the number of times that said identification information is received;
said communicating step receives device user information about the user of said communication device as said identification information; and
said processing step estimates an attribute of the user of said communication device using the device user information received by said communicating means if said count of said identification information exceeds a predetermined threshold value.

9. A processing method for a portable system including a first portable device and a second portable device, comprising:
said first portable device performing the communicating step of receiving identification information about said second portable device positioned in proximity to said first portable device;
said first portable device performing the holding step of holding the identification information which is received in holding means; and
said first portable device performing the processing step of estimating an attribute of the user of said second portable device based on the identification information held by said holding means.

10. A program which enables a computer to carry out:
a communicating process for receiving identification information about a communication device in its proximity thereof;
a holding process for holding the identification information which is received in holding means; and
a processing process for estimating an attribute of the user of said communication device based on the identification information held by said holding means.
